# FASCICULE DE BREVET EUROPEEN

(11) **EP 2 663 472 B1**
(45) Date de publication et mention de la délivrance du brevet: **12.08.2015**
(21) Numéro de dépôt: 11815490.5
(22) Date de dépôt: 20.12.2011
(51) Int. Cl.: B60R 19/50, B60Q 1/04

(54) **PEAU DE PARE-CHOCS D'UN VEHICULE.**
VERKLEIDUNG FÜR DEN STOSSFÄNGER EINES FAHRZEUG
SKIN FOR A VEHICLE BUMPER

(30) Priorité: 10.01.2011 FR 1150179
(43) Date de publication de la demande: 20.11.2013
(73) Titulaire: Peugeot Citroën Automobiles SA, 78140 Vélizy Villacoublay (FR)
(72) Inventeur: PERON, Rodolphe, F-95220 Herblay (FR); D'AMBROSIO, Leonardo, F-91510 Lardy (FR)
(86) Numéro de dépôt international: PCT/FR2011/053118
(87) Numéro de publication internationale: WO 2012/095579

(56) Documents cités:
- EP-A1- 1 213 208
- WO-A1-2009/123942
- DE-A1- 19 758 075
- FR-A1- 2 913 934
- FR-A1- 2 924 077
- US-A1- 2010 032 971

## Description

L'invention concerne une peau de pare-chocs d'un véhicule.

Les pare-chocs des véhicules modernes ne sont plus cantonnés à la seule fonction de limitation des dégâts liés aux chocs, ils doivent également supporter des éléments de la face avant, ou arrière, du véhicule, tels que des projecteurs. Cette dernière fonction est généralement obtenue par une adaptation de la peau de ces pare-chocs de manière à ce qu'elle puisse recevoir ces éléments, voir par exemple US-A-2010/0032971.

Pour un projecteur, cet aménagement est réalisé par le ménagement d'un orifice autour duquel sont disposés des moyens de fixation, tels que des plots de vis. Ces plots de vis sont directement disposés sur la peau du pare-chocs.

Un tel ménagement permet une fixation aisée et solide d'un projecteur sur la peau de pare-choc, néanmoins ces moyens de fixation, en raison de la méthode de fabrication des peaux de pare-chocs peuvent engendrer des défauts, telles que des retassures. En effet, le fait que la peau de pare-chocs présente, lors de son moulage, des surépaisseurs ponctuelles faisant office de plots de vis, peut occasionner, lors du refroidissement de la peau de pare-chocs, des défauts au niveau de sa surface

Ce type de défauts entraine, en plus d'un impact esthétique direct, une faiblesse de la peau de pare-chocs pouvant limiter la fonction première de protection du pare-chocs.

La présente invention vise à remédier à cet inconvénient.

L'inconvénient est résolu par les revendications.

Un moyen de guidage selon l'invention permet de faciliter le placement du projecteur lors de son introduction dans l'ouverture.

De toute façon, l'invention sera bien comprise à l'aide de la description qui suit en référence au dessin schématique annexé représentant, à titre d'exemple non limitatif, une forme d'exécution de cette peau de pare-chocs.
La figure 1 est une vue en perspective et à échelle agrandie de la face arrière d'une peau de pare-chocs selon l'invention avec un projecteur placé en regard d'une ouverture destinée à le recevoir.
La figure 2 est une en perspective et à échelle agrandie de l'ouverture de la peau de pare-chocs.
La figure 3 est une vue en perspective et à échelle agrandie d'un plot de réception de vis équipant la peau de pare-chocs.

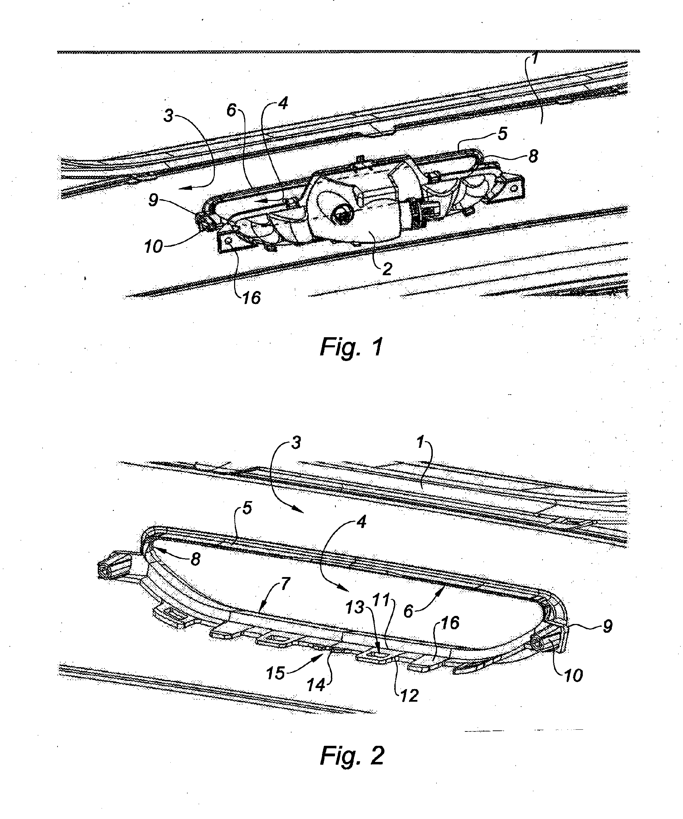

La figure 1 illustre une peau de pare-chocs 1 d'un véhicule (non illustré) recevant un projecteur 2 du type feu de brouillard.

Une telle peau de pare-chocs 1 comprend :
- une face intérieure 3 reliée au véhicule,
- au moins une ouverture 4 ménagée dans la face intérieure 3 et conformée pour recevoir au moins une partie du projecteur 2,
- une lèvre 5 s'étendant sur le pourtour de l'ouverture 4 à partir de la face intérieure 2.

La peau de pare-chocs 1 présente une forme allongée conformée pour être fixée à l'arrière du véhicule, lorsqu'il s'agit d'une peau de pare-chocs 1 arrière, ou à l'avant du véhicule, lorsqu'il s'agit d'une peau de pare-chocs 1 avant.

L'ouverture 4 est, comme illustré sur la figure 2, délimitée par un segment courbe 6 et un segment rectiligne 7 reliés l'un à l'autre par des portions courbées 8. Le segment rectiligne 7 est parallèle à la direction longitudinale de la peau de pare-chocs 1. Le segment courbe 6 est orienté de manière à ce qu'il soit en direction du sol lorsque la peau de pare-chocs 1 équipe un véhicule.

La lèvre 5 s'étend sur le pourtour de l'ouverture 4 sensiblement perpendiculairement à la face intérieure 3 de la peau de pare-chocs 1 et en direction du véhicule lorsque la peau de pare-chocs 1 équipe le véhicule.

Deux ailes 9 s'étendent de part et d'autre de la lèvre 5 selon la direction longitudinale de la peau de pare-chocs 1. Les deux ailes 9 sont chacune orientées en direction de l'extérieur de l'ouverture 4. Les deux ailes 9 sont sensiblement parallèles à l'ouverture 4 et comprises dans un même plan parallèle au plan d'ouverture 4. Chaque aile 9 est élastiquement déformable.

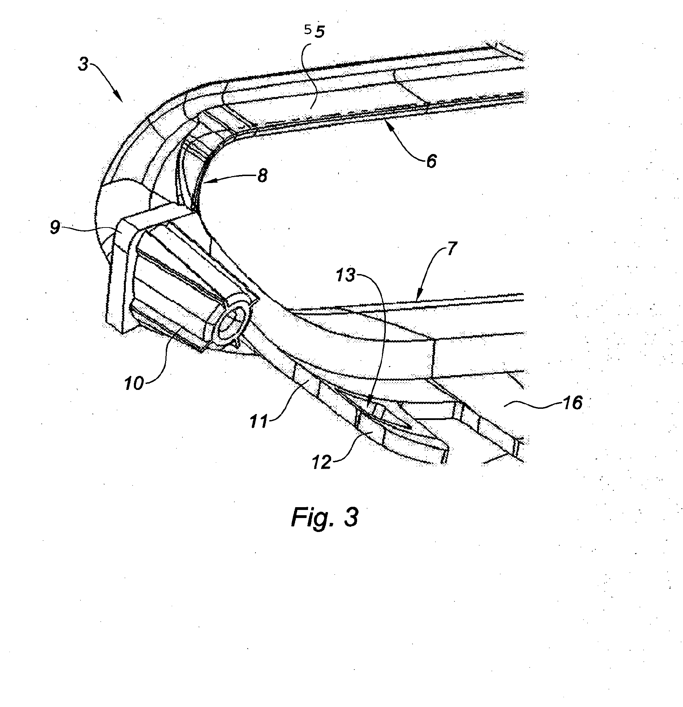

Chaque aile 9 supporte, comme illustré sur la figure 3, un plot de vis 10 et forme un moyen de support pour celui-ci.

Chaque plot de vis 10 s'étend à partir de l'aile 9 correspondante dans une direction sensiblement perpendiculaire à la surface de l'aile 9 et opposée à la face intérieure 3 de la peau de pare-chocs 1.

Chaque plot de vis 10 forme un moyen de réception de vis permettant la fixation du projecteur 2.

La lèvre 5, comme illustré sur la figure 2, présente au niveau du segment courbe 6 quatre portions 11 de lèvre à partir desquelles s'étend, pour chacune, une languette d'encliquetage 12. Chaque languette d'encliquetage 12 s'étend à partir de la portion 11 de lèvre correspondante dans la direction opposée à la face intérieure 3 de la peau de pare-chocs 1. Chaque languette d'encliquetage 12 comprend un orifice 13 de forme sensiblement rectangulaire agencé pour coopérer avec un doigt d'encliquetage (non illustré) du projecteur 2.

Chaque languette d'encliquetage 12 forme un moyen d'encliquetage pour fixer de façon amovible le projecteur 2 dans l'ouverture 4.

La lèvre 5 présente également une portion centrale 14 au niveau du segment courbe 6. La portion centrale 14 présente une rainure 15 agencée pour coopérer avec une nervure complémentaire (non illustrée) présente sur le projecteur 2 de manière à guider le projecteur 2 lors de son placement dans l'ouverture 4.

La portion centrale 14 forme un moyen de guidage.

La lèvre 5 présente en outre deux languettes de support 15 s'étendant à partir de la lèvre 5 dans la direction opposée à face intérieure 2 de la peau de pare-chocs 1 et étant disposées au niveau du segment courbe 6. Chaque languette de support 15 est agencée de façon à supporter le projecteur 2 lors de son placement dans l'ouverture 4.

Ainsi, lors du montage du projecteur 2 dans l'ouverture 4 de la peau de pare-chocs 1, le projecteur 2 est introduit dans l'ouverture 4, le projecteur 2 étant guidé au moyen de la portion centrale 14. Cette introduction est réalisée de manière à ce que le projecteur 2 soit supporté par les languettes de support 15 et de manière à ce que les doigts d'encliquetage du projecteur 2 coopèrent avec les languettes d'encliquetage 12. Le projecteur 2 en place, des vis (non illustrées) sont introduites au travers des orifices 16 de passage de vis du projecteur dans les plots de vis 10 supportés par les ailes 9.

Comme il va de soi, l'invention ne se limite pas à la seule forme d'exécution de cette peau de pare-chocs, décrite ci-dessus à titre d'exemple, elle en embrasse au contraire toutes les variantes de réalisation.

## Revendications

1. Peau de pare-chocs (1) d'un véhicule, destinée à recevoir au moins un projecteur (2), comportant :
- une face intérieure (3) destinée à être reliée au véhicule,
- au moins une ouverture (4) ménagée dans la face intérieure (3) et conformée pour recevoir au moins une partie du projecteur (2),
- une lèvre (5) s'étendant sur le pourtour de l'ouverture (4) à partir de la face intérieure (3) de manière à ce qu'elle s'étende en direction du véhicule lorsque la peau de pare-chocs (1) est montée sur le véhicule,
- des moyens de fixation du projecteur (2) sur la face intérieure (3),
la peau de pare-chocs (1) étant **caractérisée en ce qu'**elle comporte des organes de support, chaque organe de support étant formé par une aile (9) sensiblement parallèle à la face intérieure et faisant saillie à partir de la lèvre (5) en direction de l'extérieur de l'ouverture (4), les organes de support étant conformés pour supporter les moyens de fixation formés par des moyens de réception de vis et **en ce que** chaque organe de support est déformable élastiquement permettant de protéger la peau de pare-chocs (1) de déformations des moyens de fixation.

2. Peau de pare-chocs (1) selon la revendication 1, **caractérisée en ce qu'**elle comprend deux organes de support et **en ce que** les organes de support sont disposés symétriquement de part et d'autre de l'ouverture (4).

3. Peau de pare-chocs (1) selon la revendication 2, **caractérisée en ce que** les ailes (9) sont dans un même plan parallèle au plan de l'ouverture.

4. Peau de pare-chocs (1) selon la revendication 3, **caractérisée en ce que** chaque moyen de réception de vis est formé par un plot de vis (10).

5. Peau de pare-chocs (1) selon l'une des revendications 1 à 4, **caractérisée en ce qu'**elle comprend en outre des moyens de fixation amovible du projecteur (1) disposés sur la lèvre (5).

6. Peau de pare-chocs (1) selon la revendication 5, **caractérisée en ce qu'**elle comporte au moins deux portions (11) de lèvre présentant chacune un moyen d'encliquetage agencé pour coopérer avec un moyen d'encliquetage complémentaire du projecteur (2), chaque moyen d'encliquetage formant un des moyens de fixation amovible.

7. Peau de pare-chocs (1) selon l'une des revendications 1 à 6, **caractérisée en ce qu'**elle comprend en outre un moyen de guidage agencé pour guider le projecteur (2) lors de son placement dans l'ouverture (4).

## Patentansprüche

1. Stoßfängerverkleidung (1) eines Fahrzeugs, die dazu bestimmt ist, mindestens einen Scheinwerfer (2) aufzunehmen, die Folgendes umfasst:
- eine Innenseite (3), die dazu bestimmt ist, mit dem Fahrzeug verbunden zu werden,
- mindestens eine Öffnung (4), die in der Innenseite (3) eingerichtet und gestaltet ist, um mindestens einen Teil des Scheinwerfers (2) aufzunehmen,
- eine Lippe (5), die sich auf dem Umfang der Öffnung (4) ausgehend von der Innenseite (3) derart erstreckt, dass sie sich in Richtung des Fahrzeugs erstreckt, wenn die Stoßfängerverkleidung (1) auf das Fahrzeug montiert ist,
- Mittel zum Befestigen des Scheinwerfers (2) auf der Innenseite (3),
Stoßfängerverkleidung (1) **dadurch gekennzeichnet, dass** sie Stützorgane umfasst, wobei jedes Stützorgan durch einen Flügel (9), der im Wesentlichen zu der Innenseite parallel ausgebildet ist und ausgehend von der Lippe (5) nach außen der Öffnung (4) vorsteht, gebildet ist, wobei die Stützorgane gestaltet sind, um die Befestigungsmittel, die von Schraubenaufnahmemitteln gebildet sind, zu stützen, und dass jedes Stützorgane elastisch verformbar ist, was es erlaubt, die Stoßfängerverkleidung (1) vor Verformungen der Befestigungsmittel zu schützen.

2. Stoßfängerverkleidung (1) nach Anspruch 1, **dadurch gekennzeichnet, dass** sie zwei Stützorgane umfasst, und dass die Stützorgane symmetrisch auf jeder Seite der Öffnung (4) angeordnet sind.

3. Stoßfängerverkleidung (1) nach Anspruch 2, **dadurch gekennzeichnet, dass** die Flügel (9) in ein und derselben Ebene parallel zu der Öffnungsebene liegen.

4. Stoßfängerverkleidung (1) nach Anspruch 3, **dadurch gekennzeichnet, dass** jedes Schraubenaufnahmemittel durch einen Schraubenklotz (10) ausgebildet ist.

5. Stoßfängerverkleidung (1) nach einem der Ansprüche 1 bis 4, **dadurch gekennzeichnet, dass** sie außerdem Mittel zum abnehmbaren Befestigen des Scheinwerfers (1), die auf der Lippe (5) angeordnet sind, umfasst.

6. Stoßfängerverkleidung (1) nach Anspruch 5, **dadurch gekennzeichnet, dass** sie mindestens zwei Lippenabschnitte (11) umfasst, die jeweils ein Einrastmittel aufweisen, das eingerichtet ist, um mit einem komplementären Einrastmittel des Scheinwerfers (2) zusammenzuwirken, wobei jedes Einrastmittel eines der abnehmbaren Befestigungsmittel bildet.

7. Stoßfängerverkleidung (1) nach einem der Ansprüche 1 bis 6, **dadurch gekennzeichnet, dass** sie außerdem ein Führungsmittel umfasst, das eingerichtet ist, um den Scheinwerfer (2) bei seinem Platzieren in der Öffnung (4) zu führen.

## Claims

1. A skin (1) for a vehicle bumper, which is intended to receive at least one spotlight (2), and comprising:
- an inner surface (3) to be connected to the vehicle,
- at least one opening (4) provided in the inner surface (3) and shaped so as to receive at least one portion of the spotlight (2),
- a lip (5) extending over the periphery of the opening (4) from the inner surface (3) so as to extend toward the vehicle when the bumper skin (1) is mounted onto the vehicle,
- means for attaching the spotlight (2) to the inner surface (3),
the bumper skin (1) being **characterized in that** it comprises support members, each support member being formed by a wing (9) substantially parallel to the inner surface and protruding from the lip (5) toward the outside of the opening (4), the support members being shaped so as to support the attachment means formed by screw receiving means and **in that** each support member is elastically deformable, permitting the bumper skin (1) to be protected from deformations of the attachment means.

2. The bumper skin (1) according to Claim 1, **characterized in that** it includes two support members and **in that** the support members are disposed symmetrically on either side of the opening (4).

3. The bumper skin (1) according to Claim 2, **characterized in that** the wings (9) are in the same plane parallel to the plane of the opening.

4. The bumper skin (1) according to Claim 3, **characterized in that** each screw receiving means is formed by a screw pin (10).

5. The bumper skin (1) according to one of Claims 1 to 4, **characterized in that** it further includes detachable attachment means of the spotlight (1) disposed on the lip (5).

6. The bumper skin (1) according to Claim 5, **characterized in that** it comprises at least two lip portions (11) each having a detenting means arranged to cooperate with a complementary detenting means of the spotlight (2), each detenting means forming one of the detachable attachment means.

7. The bumper skin (1) according to one of Claims 1 to 6, **characterized in that** it further includes a guiding means arranged for guiding the spotlight (2) during its placement in the opening (4).
